# EUROPEAN PATENT APPLICATION

(11) **EP 2 854 038 A1**
(43) Date of publication of application: **01.04.2015**
(21) Application number: 12858677.3
(22) Date of filing: 30.08.2012
(51) Int. Cl.: G06F 13/14, G06F 13/38, G06F 9/44

(54) **SYSTEM AND METHOD FOR INTERCONNECTING USER TERMINAL AND EXTERNAL DEVICE**

(30) Priority: 23.05.2012 KR 20120054685
(71) Applicant: SK Planet Co., Ltd., Seongnam-si Gyeonggi-do 463-400 (KR)
(72) Inventor: LEE, Sang Yool, Seoul 100-999 (KR)
(74) Representative: Isarpatent
(86) International application number: PCT/KR2012/006922
(87) International publication number: WO 2013/176342

(57) **Abstract**

The present invention relates to a system and method for connecting a user device and an external device, the system for connecting a user device and an external device, the system includes: a user application which is installed in the user device, includes a user device communication interface for data input/output to receive a control signal through the user device communication interface, process the received control signal, and output control data generated as a result of the processing through the user device communication interface; an extended application which is installed in the external device, includes an external device communication interface for data input/output to receive control data of the user device through the external device communication interface, process the received control data, generate a control signal according to a user's selection, and output the control signal through the external device communication interface; and an application connection module which is installed in the external device and respectively connected to the user device communication interface and the external device communication interface to mediate data transmission and reception between the user application and the extended application. Accordingly, the connection module which communicates with applications installed in the user device is loaded in the external device to connect the user device and the external device such that the applications installed in the user device can be easily used in the external device and the connection module can simultaneously communicate with two or more applications installed in the user device.

## Description

### [Technical Field]

The present invention relates to a system and method for connecting a user device and an external device and, more particularly, to a system and method for connecting a user device and an external device, in which a connection module for interconnecting applications of the user device and applications of the external device is loaded in the external device such that the applications installed in the user device can be easily used in the external device and the connection module simultaneously communicates with two or more applications installed in the user device such that an application in which two or more applications are combined can be executed in the external device.

### [Background Art]

As various applications for smartphones have been developed, there is a growing need to use the programs of the smartphones on a larger screen. To meet this need, conventional technologies for connecting devices such as navigation systems and smartphones have been developed.

As a conventional method for connecting a smartphone and an external device, there is a method of using a program-to-program communication by implementing a program of a service provider in the smartphone and the external device, respectively. According to this conventional technology, it is necessary to develop a connection program which corresponds to each program of the smartphone in a one-to-one relationship, which is cumbersome.

Moreover, as another conventional method, there is the MirrorLink technology that mirrors a smartphone's screen and sound. The MirrorLink technology enables an external device to copy the smartphone's screen and audio data and display the same screen and audio on the external display. In the case of the MirrorLink technology, the external device should read the smartphone's frame buffer, and thus important information stored in the smartphone may be exposed to the external device, which is problematic.

Furthermore, the currently used methods for connecting the smartphones and the external devices only provide a technology that enables the programs of both devices to communicate with each other in a one-to-one manner, and thus it is impossible to create a mash-up service that provides a third application by combining two or more applications, which is also problematic.

### [Disclosure]

### [Technical Problem]

Accordingly, the present invention has been made to solve the above-described problems, and an object of the present invention is to provide a system and method for connecting a user device and an external device, in which a connection module for interconnecting applications of the user device and applications of the external device is loaded in the external device such that the applications installed in the user device can be easily used in the external device and the connection module simultaneously communicates with two or more applications installed in the user device such that an application in which two or more applications are combined can be executed in the external device.

### [Technical Solution]

According to an aspect of the present invention to achieve the above object, there is provided a system for connecting a user device and an external device, the system comprising: a user application which is installed in the user device, includes a user device communication interface for data input/output to receive a control signal through the user device communication interface, process the received control signal, and output control data generated as a result of the processing through the user device communication interface; an extended application which is installed in the external device, includes an external device communication interface for data input/output to receive control data of the user device through the external device communication interface, process the received control data, generate a control signal according to a user's selection, and output the control signal through the external device communication interface; and an application connection module which is installed in the external device and respectively connected to the user device communication interface and the external device communication interface to mediate data transmission and reception between the user application and the extended application.

Here, the application connection module may input and output the control signal and the control data using a protocol defined for each of a plurality of user applications in a one-to-one manner.

According to another aspect of the present invention to achieve the above object, there is provided an application connection module comprising: a user device interface which accesses a user application of a user device to receive control data of the user application and transmit a control signal to the user application; an external device interface which accesses an extended application of an external device to transmit the control data and receive the control signal to be transmitted to the user application; and a communication protocol control unit which mediates data transmission and reception between the user device interface and the external device interface according to a predetermined protocol.

Here, the communication protocol control unit may establish one-to-one communication with the user application according to a predetermined protocol to transmit and receive the control data and the control signal.

According to still another aspect of the present invention to achieve the above object, there is provided a system for connecting a user device and an external device, the system comprising: an extended application which includes an external device communication interface for data input/output of a user application executed in the user device to receive control data of the user device through the external device communication interface, process the received control data, generate a control signal according to a user's selection, and output the control signal through the external device communication interface; and an application connection module which is installed in the external device and respectively connected to the user device communication interface and the external device communication interface to mediate data transmission and reception between the user application and the extended application.

Here, the application connection module may input and output the control signal and the control data using a protocol defined for each of a plurality of user applications in a one-to-one manner.

Moreover, when a plurality of extended applications are executed, the application connection module may set a priority order to sequentially transmit control data to the plurality of extended applications and receive control signals of the extended applications.

Furthermore, when a plurality of user applications are executed, the application connection module may process control data of the plurality of user applications in a single extended application and simultaneously display the processing results on a single screen.

According to yet another aspect of the present invention to achieve the above object, there is provided a method for connecting a user device and an external device, the method comprising the steps of: allowing an application connection module, which is respectively connected to a user application installed in the user device and an extended application installed in the external device and displaying a control result of the user device, to be executed; allowing the user application of the user device to be executed to transmit control data; establishing, at the application connection module, one-to-one communication with the user application to receive the control data of the user application; transmitting, at the application connection module, the control data to the extended application; and receiving and displaying, at the extended application, the control data.

According to still yet another aspect of the present invention to achieve the above object, there is provided a method for connecting a user device and an external device, the method comprising the steps of: allowing an application connection module, which is respectively connected to a user application installed in the user device and an extended application installed in the external device and displaying a control result of the user device, to be executed; establishing, at the application connection module, one-to-one communication between the user application and the extended application; transmitting, at the user application of the user device, control data according to the setting of the application connection module; receiving and displaying, at the extended application, the control data; transmitting, at the extended application, a control signal according to the setting of the application connection module; and receiving and processing, at the user application of the user device, the control signal.

According to a further aspect of the present invention to achieve the above object, there is provided a method for controlling an application connection module for connecting a user device and an external device, the method comprising the steps of: accessing each of a plurality of user applications executed in the user device to receive control data using different predetermined communication protocols for the plurality of user applications; and transmitting the control data to an extended application executed in the external device using a predetermined protocol.

Here, the step of transmitting of the control data to the extended application executed in the external device using a predetermined protocol may comprise the step of, when a plurality of control data are received from the plurality of user applications, sequentially transmitting the control data to the corresponding extended application according to a priority rule of the extended application.

Here, the step of transmitting of the control data to the extended application executed in the external device using a predetermined protocol may comprise the step of, when a plurality of control data are received from the plurality of user applications, simultaneously displaying the processing results of the plurality of extended applications on a single screen.

According to another further aspect of the present invention to achieve the above object, there is provided a recording medium readable by an electronic device, in which a method for controlling an application connection module for connecting a user device and an external device is recorded as a program, the method comprising the steps of: accessing each of a plurality of user applications executed in the user device to receive control data using different predetermined communication protocols for the plurality of user applications; and transmitting the control data to an extended application executed in the external device using a predetermined protocol.

According to still another further aspect of the present invention to achieve the above object, there is provided a method for controlling an application connection module for connecting a user device and an external device, the method comprising the steps of: setting a one-to-one communication protocol for a plurality of user applications being executed in the user device; receiving control data of the plurality of user applications using the one-to-one communication protocol; and transmitting the received plurality of control data to a single extended application executed in the external device using a predetermined protocol.

Here, the method may further comprise the step of processing, at the single extended application, the plurality of control data and simultaneously displaying the processing results on a single screen.

According to yet another further aspect of the present invention to achieve the above object, there is provided a recording medium readable by an electronic device, in which a method for controlling an application connection module for connecting a user device and an external device is recorded as a program, the method comprising the steps of: setting a one-to-one communication protocol for a plurality of user applications being executed in the user device; receiving control data of the plurality of user applications using the one-to-one communication protocol; and transmitting the received plurality of control data to a single extended application executed in the external device using a predetermined protocol.

### [Advantageous Effects]

As described above, the system and method for connecting the user device and the external device according to the present invention, in which the connection module for interconnecting the applications of the user device and the applications of the external device is loaded in the external device, can allow the applications installed in the user device to be easily used in the external device and enable the one-to-one communication between the user application and the extended application without leakage of control signals and data of the applications of the user device to the application of the external device.

Moreover, since the connection module of the present invention defines a one-to-one communication protocol for the applications of the user device, the applications of the user device can interconnect with the application of the smartphone in a safe manner through the communication protocol published by the communication. Furthermore, since the key operations of each main application are performed in the application of the user device, only the application of the user device may be updated in the event of modification or extension of the service of the application.

In addition, when the application of the user device maintains the communication protocol with the connection module, the application services can be freely combined and extended in an environment where the connection module is driven.

### [Description of Drawings]

FIG. 1 is a control block diagram of a system for connecting a user device and an external device in accordance with an embodiment of the present invention;
FIG. 2 is a control block diagram of a system for connecting a user device and an external device in accordance with another embodiment of the present invention;
FIG. 3 is a control block diagram of an application connection module in accordance with an embodiment of the present invention;
FIG. 4 shows a screen display state of a system for connecting a user device and an external device in accordance with an embodiment of the present invention; and
FIG. 5 is a control flowchart of a system for connecting a user device and an external device in accordance with an embodiment of the present invention.

### [Mode for Invention]

Hereinafter, preferred embodiments in accordance with the present invention will be described with reference to the accompanying drawings. Throughout the drawings, the same or corresponding components are designated by the same reference numerals and repetitive description thereof will be omitted.

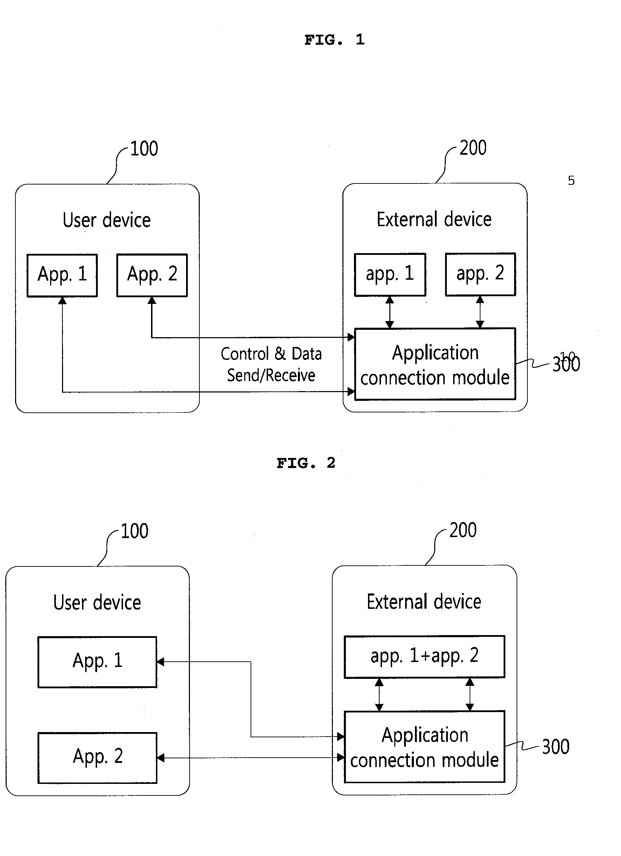

FIG. 1 is a control block diagram of a system for connecting a user device and an external device in accordance with an embodiment of the present invention.

A system for connecting a user device and an external device comprises a user device 100, an external device 200 connected to the user device, user applications App.1 and App.2 driven in the user device 100, extended applications app.1 and app.2 driven in the external device 200, and an application connection module 300 which enables communication with the user device 100 in the external device 200.

The user applications App.1 and App.2 for providing services are installed in the user device 100. Each of the user applications App.1 and App.2 installed in the user device 100 has a communication interface for communication with the application connection module 300. Each of the user applications App.1 and App.2 of the user device 100 performs a main process for providing a service and provides the processing result to the application connection module 300.

The extended applications app.1 and app.2, which correspond to the user applications App.1 and App.2 installed in the user device 100, are installed in the external device 200. Each of the extended applications app.1 and app.2 installed in the external device 200 has a communication interface for communication with the application connection module 300. The extended applications app.1 and app.2 identify the state of the user applications App.1 and App.2 through the application connection module 300, transmit control signals, and receive and display the processing results of the user applications App.1 and App.2.

The application connection module 300 may be installed in the form of software or hardware in the external device 200. The application connection module 300 can communicate with each of the user applications App.1 and App.2 and transmit and receive data through a protocol defined for each of the user applications App.1 and App.2 in a one-to-one manner. Moreover, the application connection module 300 performs communication with the extended applications app.1 and app.2 of the external device 200 to mediate data transmission and reception between the user applications App.1 and App.2 and the extended applications app.1 and app.2.

Here, the protocol for communication with the user applications App.1 and App.2 and the protocol for communication with the extended applications app.1 and app.2 are different from each other. The application connection module 300 defines a protocol for one-to-one communication with each of the user applications App.1 and App.2, and this protocol information is not exposed to the extended applications app.1 and app.2 of the external device 200. Accordingly, the extended applications app.1 and app.2 of the external device 200 exchange data through communication protocols defined separately by the application connection module 300. In this manner, it is possible to protect control codes for the user applications App.1 and App.2 of the user device 100 so as not to be exposed to a developer of the extended applications app.1 and app.2 of the external device 200. On the contrary, the application connection module 300 communicates with several applications of the external device 200 in an open manner. With this open communication, it is possible to develop various applications of the external device 200 using the functions of the applications of the user device 100.

The application connection module 300 sets the data assignment sequence of the extended applications app.1 and app.2 or a priority order related to the processing sequence of the control signals according to internal operating rules, transmits data of the user applications App.1 and App.2 to the extended applications app.1 and app.2 driven in the external device 200, and transmits the control signals to the user applications App.1 and App.2. Accordingly, when a first user application APP.1 and a second user application APP.2 are executed simultaneously and transmit data, the application connection module 300 may first transmit the data to the first extended application app.1 and then transmits the data to the second extended application app.2.

FIG. 2 is a control block diagram of a system for connecting a user device 100 and an external device 200 in accordance with another embodiment of the present invention.

As shown in FIG. 2, the extended applications app.1 and app.2 of the external device 200 may receive data from two or more user applications App.1 and App.2 at a time through communication with the application connection module 300.

Through this, it is possible to effectively configure UIs of two or more applications on a single screen and provide various mash-up services.

When a first user application App.1 and a second user application App.2 of the user device 100 are executed simultaneously and transmit data, the external device 200 performs a third extended application app.1+app.2 that combines and displays a first extended application app.1 and a second extended application app.2.

Accordingly, the external device 200 can provide a third service in the form of a mash-up combining two or more services.

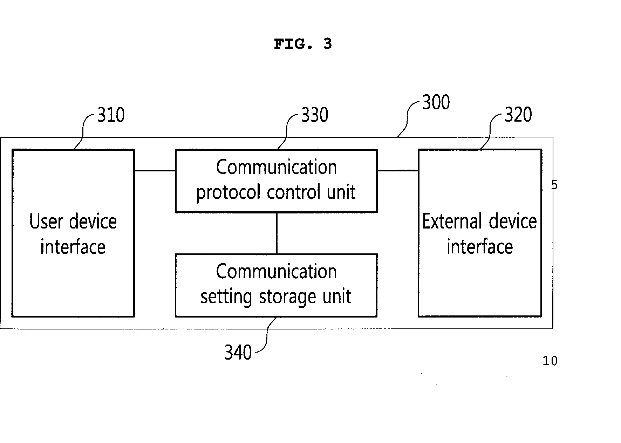

FIG. 3 is a control block diagram of an application connection module 300 in accordance with an embodiment of the present invention.

As shown in FIG. 3, the application connection module 300 comprises a user device interface 310 connected to user applications App.1 and App.2, an external device interface 320 connected to extended applications app.1 and app.2, a communication protocol control unit 330, and a communication setting storage unit 340.

The user device interface 310 accesses the user applications App.1 and App.2 of a user device 100 to input and output data. The user device interface 310 transmits control signals received from an external device 200 to the user applications App.1 and App.2 and receives control data from the user applications App.1 and App.2.

The external device interface 320 accesses the extended applications app.1 and app.2 of the external device 200 to input and output data. The external device interface 320 transmits control data received from the user device 100 to the extended applications app.1 and app.2 and receives control signals from the extended applications app.1 and app.2.

Information on protocols agreed between the user device interface 310 and the user applications App.1 and App.2 and information on protocols agreed between the external device interface 320 and the extended applications app.1 and app.2 are stored in the communication setting storage unit 340.

The communication protocol control unit 330 mediates data transmission and reception between the user device interface 310 and the external device interface 320 according to the protocols stored in the communication setting storage unit 340. The user device interface 310 connected to the user applications App.1 and App.2 under the control of the communication protocol control unit 330 performs one-to-one communication using a pre-defined protocol. Here, to prevent information leakage of information on the user device, the security of the communication protocols between the user device interface 310 and the user applications App.1 and App.2 may be maintained.

The communication protocol control unit 330 transmits and receives data to and from the extended applications app.1 and app.2 through the external device interface 320, and the external device interface 320 connected to the extended applications app.1 and app.2 performs communication with various applications in an open manner. Accordingly, it is possible to develop various extended applications of the external device to use the functions of the applications of the user device.

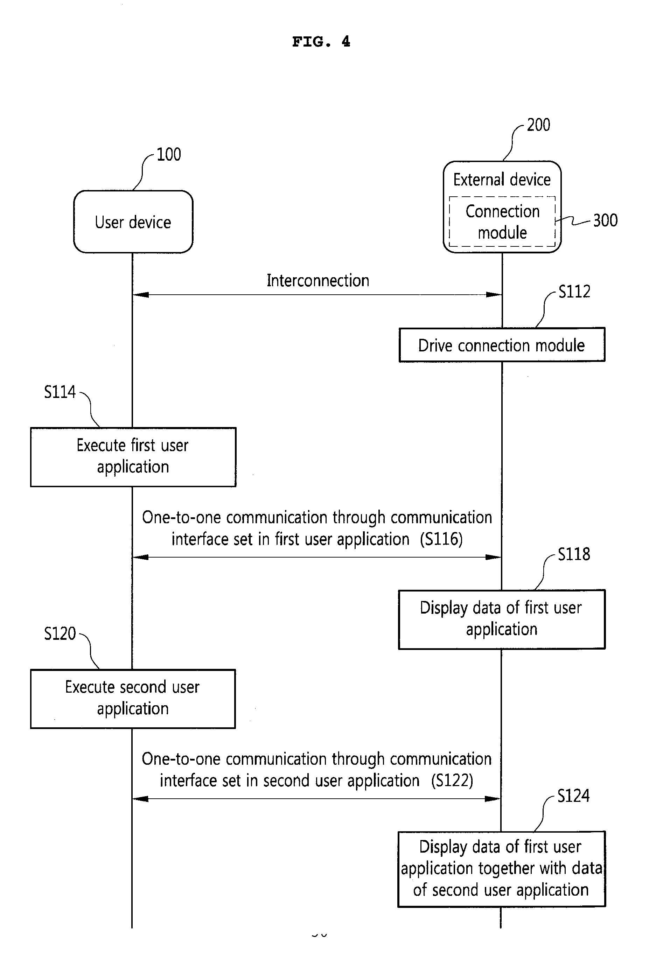

FIG. 4 shows a screen display state of a system for connecting a user device 100 and an external device 200 in accordance with an embodiment of the present invention, in which when a third service in the form of a mash-up combining a first user application App.1 and a second user application App.2 is provided, screen displays of the external device 200 are shown.
(A) shows a state in which a screen of the external device 200 is divided into two regions, and an execution screen app1 of the first user application App.1 and an execution screen app2 of the second user application App.2 are simultaneously displayed.
(B) shows a state in which the screen of the external device 200 is divided into a main screen and a sub-screen, the execution screen app1 of the first user application App.1 is displayed on the main screen, and the execution screen app2 of the second user application App.2 is displayed on the sub-screen.
(C) shows a state in which the screen of the external device 200 is divided into a main screen and a sub-screen, the execution screen app2 of the second user application App.2 is displayed on the main screen, and the execution screen app1 of the first user application App.1 is displayed on the sub-screen.

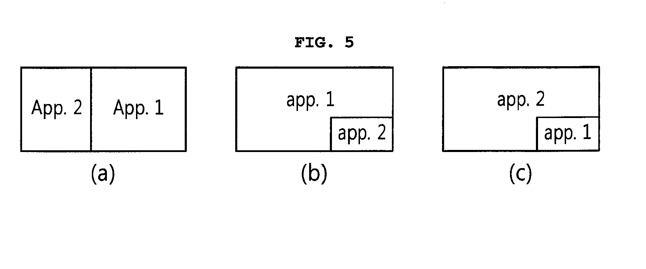

FIG. 5 is a control flowchart of a system for connecting a user device and an external device in accordance with an embodiment of the present invention.

A user device 100 in which user applications App.1 and App.2 are installed and an external device 200 in which extended applications app.1 and app2 corresponding to the user applications App.1 and App.2 are installed are interconnected. For example, a smartphone and a navigation system may be connected via a cable or a short-range wireless communication method such as Bluetooth, etc.

Then, an application connection module 300 of the external device is driven (S112). Here, a communication protocol for one-to-one communication for each of the applications installed in the user device 100 is defined in the application connection module 300.

When a first user application APP.1 is executed by the user device 100 (S114), the first user application APP.1 of the user device 100 and a first extended application app.1 of the external device 200 perform one-to-one communication through the application connection module 300 (S116). Here, the first user application App.1 performs a main process for providing a service and transmits the control results, and the first extended application app.1 identifies the state of the first user application App.1 and receives and displays the control result (S118). Moreover, the first extended application app.1 may transmit a control signal input by a user to the first user application App.1.

Upon execution of the first user application App.1, the user device 100 may execute the second user application App.2 (S120). The second user application App.2 of the user device 100 and the second extended application app.2 of the external device 200 perform one-to-one communication through the application connection module 300 (S122).

Accordingly, data of the first user application and the data of the second user application are simultaneously displayed on the external device 200 (S124). Here, the application connection module 300 may set the data assignment sequence of the first and second extended applications app.1 and app.2 or a priority order related to the processing sequence of control signals according to predetermined internal operating rules, transmit data to each of the extended applications app.1 and app.2, and receive control signals based on the priority order.

Moreover, the external device 200 can simultaneously communicate with one or more applications of the user device 100 through the application connection module 300 and provide a third service in the form of a mash-up combining two or more services using the same. For example, while listening to a music streaming service in the external device 200 using a music application of the user device 100, a user can use a guide service in the external device 200 using a navigation application of the user device 100 and, at the same time, open a message screen received in the user device 100.

As such, it is appreciated that the present invention can be carried out in other specific forms without changing a technical idea or essential characteristics by one having ordinary skilled in the art to which the present invention pertains to. Therefore, embodiments described above are for illustration purpose in all respect but not limited to them. The scope of the present invention is represented by claims described below rather than the detailed description, and any change and variations derived from the meaning, the scope and the concept of equality of claims should be interpreted to be included to the scope of the present invention.

### [Industrial Applicability]

The present invention can be used to provide a system and method for connecting a user device and an external device, in which a connection module for interconnecting applications of the user device and applications of the external device is loaded in the external device such that the applications installed in the user device can be easily used in the external device and the connection module simultaneously communicates with two or more applications installed in the user device such that an application in which two or more applications are combined can be executed in the external device.

## Claims

1. A system for connecting a user device and an external device, the system comprising:
a user application which is installed in the user device, includes a user device communication interface for data input/output to receive a control signal through the user device communication interface, process the received control signal, and output control data generated as a result of the processing through the user device communication interface;
an extended application which is installed in the external device, includes an external device communication interface for data input/output to receive control data of the user device through the external device communication interface, process the received control data, generate a control signal according to a user's selection, and output the control signal through the external device communication interface; and
an application connection module which is installed in the external device and respectively connected to the user device communication interface and the external device communication interface to mediate data transmission and reception between the user application and the extended application.

2. The system of claim 1, wherein the application connection module inputs and outputs the control signal and the control data using a protocol defined for each of a plurality of user applications in a one-to-one manner.

3. An application connection module comprising:
a user device interface which accesses a user application of a user device to receive control data of the user application and transmit a control signal to the user application;
an external device interface which accesses an extended application of an external device to transmit the control data and receive the control signal to be transmitted to the user application; and
a communication protocol control unit which mediates data transmission and reception between the user device interface and the external device interface according to a predetermined protocol.

4. The application connection module of claim 3, wherein the communication protocol control unit establishes one-to-one communication with the user application according to a predetermined protocol to transmit and receive the control data and the control signal.

5. A system for connecting a user device and an external device, the system comprising:
an extended application which includes an external device communication interface for data input/output of a user application executed in the user device to receive control data of the user device through the external device communication interface, process the received control data, generate a control signal according to a user's selection, and output the control signal through the external device communication interface; and
an application connection module which is installed in the external device and respectively connected to the user device communication interface and the external device communication interface to mediate data transmission and reception between the user application and the extended application.

6. The system of claim 5, wherein the application connection module inputs and outputs the control signal and the control data using a protocol defined for each of a plurality of user applications in a one-to-one manner.

7. The system of claim 5, wherein when a plurality of extended applications are executed, the application connection module sets a priority order to sequentially transmit control data to the plurality of extended applications and receive control signals of the extended applications.

8. The system of claim 5, wherein when a plurality of user applications are executed, the application connection module processes control data of the plurality of user applications in a single extended application and simultaneously displays the processing results on a single screen.

9. A method for connecting a user device and an external device, the method comprising the steps of:
allowing an application connection module, which is respectively connected to a user application installed in the user device and an extended application installed in the external device and displaying a control result of the user device, to be executed;
allowing the user application of the user device to be executed to transmit control data;
establishing, at the application connection module, one-to-one communication with the user application to receive the control data of the user application;
transmitting, at the application connection module, the control data to the extended application; and
receiving and displaying, at the extended application, the control data.

10. A method for connecting a user device and an external device, the method comprising the steps of:
allowing an application connection module, which is respectively connected to a user application installed in the user device and an extended application installed in the external device and displaying a control result of the user device, to be executed;
establishing, at the application connection module, one-to-one communication between the user application and the extended application;
transmitting, at the user application of the user device, control data according to the setting of the application connection module;
receiving and displaying, at the extended application, the control data;
transmitting, at the extended application, a control signal according to the setting of the application connection module; and
receiving and processing, at the user application of the user device, the control signal.

11. A method for controlling an application connection module for connecting a user device and an external device, the method comprising the steps of:
accessing each of a plurality of user applications executed in the user device to receive control data using different predetermined communication protocols for the plurality of user applications; and
transmitting the control data to an extended application executed in the external device using a predetermined protocol.

12. The method of claim 11, wherein the transmitting of the control data to the extended application executed in the external device using a predetermined protocol comprises the step of, when a plurality of control data are received from the plurality of user applications, sequentially transmitting the control data to the corresponding extended application according to a priority rule of the extended application.

13. The method of claim 11, wherein the transmitting of the control data to the extended application executed in the external device using a predetermined protocol comprises the step of, when a plurality of control data are received from the plurality of user applications, simultaneously displaying the processing results of the plurality of extended applications on a single screen.

14. A recording medium readable by an electronic device, in which a method for controlling an application connection module for connecting a user device and an external device is recorded as a program, the method comprising the steps of: accessing each of a plurality of user applications executed in the user device to receive control data using different predetermined communication protocols for the plurality of user applications; and transmitting the control data to an extended application executed in the external device using a predetermined protocol.

15. A method for controlling an application connection module for connecting a user device and an external device, the method comprising the steps of:
setting a one-to-one communication protocol for a plurality of user applications being executed in the user device;
receiving control data of the plurality of user applications using the one-to-one communication protocol; and
transmitting the received plurality of control data to a single extended application executed in the external device using a predetermined protocol.

16. The method of claim 15, further comprising the step of processing, at the single extended application, the plurality of control data and simultaneously displaying the processing results on a single screen.

17. A recording medium readable by an electronic device, in which a method for controlling an application connection module for connecting a user device and an external device is recorded as a program, the method comprising the steps of: setting a one-to-one communication protocol for a plurality of user applications being executed in the user device; receiving control data of the plurality of user applications using the one-to-one communication protocol; and transmitting the received plurality of control data to a single extended application executed in the external device using a predetermined protocol.
